# EUROPEAN PATENT APPLICATION

(11) **EP 4 775 548 A1**
(43) Date of publication of application: **15.07.2026**
(21) Application number: 25212542.2
(22) Date of filing: 31.10.2025
(51) Int. Cl.: C02F 1/52, C02F 1/76

(54) **METHODS AND BIOPOLYMER COMPOSITIONS FOR REMOVING ALGAE FROM POOLS AND SPA**

(30) Priority: 10.01.2025 US 202563743865 P
(71) Applicant: Sani-Marc Inc., Victoriaville, Quebec G6P 7E3 (CA)
(72) Inventor: GARDNER, William, Victoriaville, QC, G6T 2V3 (CA); ROMANENS, Alexandre, Notre-Dame-du-Bon-Conseil, J0C 1A0 (CA); CARDENAS BATES, Ilse Ileana, 2560 Nidau, Biel, Berne (CH); MARCHAND, Patrick, Victoriaville, QC, G6P 8B5 (CA)
(74) Representative: De Clercq & Partners

(57) **Abstract**

Described herein are biopolymer compositions for removing algae from recreational waters such as swimming pools and spas, kits comprising same and method to remove such undesirable algae. The biopolymer is selected for causing flocculation of algae when added to the recreational waters. Thanks to addition of the biopolymer, flocculated algae can easily be removed from the waters by being trapped in the pool or spa's filtration system. In embodiments the biopolymer comprises chitosan, preferably high molecular weight chitosan (HMWC).

## Description

### CROSS REFERENCE TO RELATED APPLICATION

This application claims priority to U.S. provisional patent application No. 63/743,865 filed on January 10, 2025.

### FIELD OF THE INVENTION

The invention relates to the field of water treatment, and more particularly to removal of algae from recreational waters such as swimming pools and spas.

### BACKGROUND OF THE INVENTION

Algal cells are aquatic plants that are undesirable in recreational waters such as swimming pools and spas. Their presence must be controlled because, when reaching certain concentrations, water becomes visibly green and cloudy, which makes that water much less attractive to swimmers and bathers. In addition, presence of algae can disbalance the water equilibrium and such disbalance can further promote development of bacteria and other pathogens. Since existing methods for the treatment of algae require using chemicals such as chlorine and quaternary ammonium-based algaecides, there is need for a composition that is more eco-friendly than existing commercial pool-treatment products.

Chitosan is a natural polymer derived from chitin. It has been used to treat swimming waters, including pools, particularly for the removal of metal ions by sequestration and for the flocculation of fine suspended particles. However, it has never been proposed to use chitosan to remove live algae from recreational waters.

Patent US 8,281,515 teaches methods for growing and harvesting algae wherein the algal cells are grown in aggregated clumps or mats formed by the inclusion of soluble or insoluble chitosan or chitin. Therefore, in that patent the chitosan and chitin are used to grow the algae on a commercial scale, as opposed to water purification and/or clarification of recreational waters.

Accordingly, there is a need for compositions comprising a biopolymer such as chitosan, chitin or the like, for removing algae from recreational waters.

There is particularly a need for a high molecular weight (HMW) chitosan solution that can be added to the waters of a pool or spa to flocculate algal cells therein.

There is also a need for methods wherein algae present in the waters of pools or spa are flocculated thanks to addition of a biopolymer such as chitosan or chitin, and wherein flocculated algae can easily be removed from the waters by being trapped in the pool or spa's filtration system.

The present invention addresses these needs and other needs as it will be apparent from the review of the disclosure and description of the features of the invention hereinafter.

### BRIEF SUMMARY OF THE INVENTION

According to one aspect, the invention relates to a liquid composition for removing undesirable algae from recreational waters, the composition comprising an aqueous solution of a biopolymer, wherein said biopolymer is selected for causing flocculation of algae when added to said recreational waters, and wherein the biopolymer is present in an amount and at a concentration causing the flocculation.

According to another aspect, the invention relates to a liquid chitosan composition for removing undesirable algae from recreational waters, the composition comprising about 0.1% w/w to about 10% w/w chitosan solubilized in an aqueous acid solution.

According to another aspect, the invention relates to a dry composition for removing undesirable algae from recreational waters, the composition comprising a biopolymer and solubilizing agent, wherein said biopolymer is selected for causing flocculation of algae when added to the recreational waters.

According to another aspect, the invention relates to a method to remove undesirable algae from recreational waters, the method comprising:
- providing a composition of biopolymer(s) (e.g., a liquid composition or a dry composition as defined herein);
- adding said composition to the recreational waters for flocculating undesirable algae present therein; and
- removing flocculated algae from the recreational waters.

According to another aspect, the invention relates to a kit for water treatment of swimming pools or spas, comprising: (i) a container comprising one or more dose of a composition as defined in any one of claims 1 to 17; and (ii) at least one of (a) chlorine, (b) a measuring cup, (c) water analysis product(s), and (c) written instructions.

According to another aspect, the invention relates to the use of a biopolymer for removing undesirable algae from recreational waters.

Preferably the biopolymer is chitosan, and even more preferably high molecular weight chitosan (HMWC).

Additional aspects, advantages and features of the present invention will become more apparent upon reading of the following non-restrictive description of preferred embodiments which are exemplary and should not be interpreted as limiting the scope of the invention.

### BRIEF DESCRIPTION OF THE FIGURES

For the invention to be readily understood, embodiments of the invention are illustrated by way of example in the accompanying figures.
**Figures 1A and 1B** are pictures of an outdoor swimming pool comprising algae, the pool being treated in accordance with **Example 1** with a composition of the present invention, the pictures showing the waters before treatment **(****Fig. 1A****)** and 24h after treatment **(****Fig. 1B****).**
**Figures 2A and 2B** are pictures of an outdoor swimming pool comprising algae, the pool being treated in accordance with **Example 2** with a composition of the present invention, the pictures showing the waters before treatment **(****Fig. 2A****),** 24h after a first treatment **(****Fig. 2B****),** and 24h after a second treatment **(****Fig. 2C****).**
**Figures 3A and 3B** are pictures of an outdoor swimming pool comprising algae, the pool being treated in accordance with **Example 3** with a composition of the present invention, the pictures showing the waters before treatment **(****Fig. 3A****)** and 24h after treatment **(****Fig. 3B****).**
**Figures 4A and 4B** are pictures of an outdoor swimming pool comprising algae, the pool being treated in accordance with **Example 4** with a composition of the present invention, the pictures showing the waters before treatment **(****Fig. 4A****)** and 24h after treatment **(****Fig. 4B****).**

Further details of the invention and its advantages will be apparent from the detailed description included below.

### DETAILED DESCRIPTION OF EMBODIMENTS

In the following description of the embodiments, references to the accompanying figures are illustrations of an example by which the invention may be practised. It will be understood that other embodiments may be made without departing from the scope of the invention disclosed. Unless defined otherwise, all technical and scientific terms used herein have the same meaning as commonly understood by one of ordinary skill in the art to which the invention belongs.

### General overview

The invention provides compositions and methods for removing undesirable algae from recreational waters such as pools and spas.

As used herein, the term **"algae"** refers to aquatic algal cells and it encompasses any type of algae that can be found in recreational waters such as pools and spa. For instance, for pools these may include "green algae " (the most common type found in pools). The term **"algae"** further encompasses cyanobacteria which are commonly referred to as "blue-green algae". In embodiments, the present invention is direct against any type of algae that are in suspension in the water.

In accordance with the invention, the composition comprises an aqueous solution of at least one biopolymer that can flocculate algal cells when added to the recreational waters. Thereafter, the flocculated algae can be removed from the recreational waters, for instance by trapping in a filtration system.

### Compositions for removing undesirable algae

One aspect of the invention concerns a composition for removing undesirable algae from recreational waters.

In one embodiment the composition comprises a biopolymer in solution. As used herein, the term **"biopolymer"** encompasses any natural substances that can act as a **"flocculating agent"** with respect to the algae, i.e., to encourage suspended algae to aggregate. In embodiments, one single molecule of biopolymer is able to capture or aggregate several algae cells.

In preferred embodiments the biopolymer is a polysaccharide such as chitosan, more preferably high molecular weight chitosan (HMWC).

In embodiments, the biopolymer is present in the composition in a sufficient amount and/or at a minimal concentration such that a small volume of the composition (e.g., 100 ml, or 250 ml, or 500 ml, or 1 liter) can provide for the removal (e.g., flocculation) of algae in a large volume of water (e.g. 10 000 l, or 25 000 l, or 50 000 l, or 100 000 l or more). Therefore, in embodiments the composition can be diluted in the recreational water by a factor of at least 10 000, at least 20 000, at least 30 000, at least 50 000, or at least 50 000, at least 75 000, or at least 100 000, or at least 250 000, or more, and still be effective in the removal of algae. In embodiments, the recreational waters comprises about 0.1 ppm to about 10 ppm of biopolymer, or about 0.2 ppm to about 5 ppm of biopolymer, about 0.3 ppm to about 3 ppm of biopolymer, or about 0.5 ppm to about 1 ppm of biopolymer. In embodiments, flocculation still occurs when the biopolymer is diluted in the recreational waters at a concentration of about 10 ppm (e.g., a dilution factor of 100 000) to about 0.1 ppm (e.g., a dilution factor of 10 000 000), or about 1 ppm (e.g., a dilution factor of about 1 000 000) to about 0.5 ppm (e.g., a dilution factor of about 2 000 000.

In embodiments, the aqueous solution comprises about 0.1% w/w to about 10% w/w biopolymer, or about 0.5% w/w to about 5% w/w biopolymer or about 1% w/w to about 4% w/w biopolymer. Those skilled in the art understands that the maximum dissolving concentration may vary depending on the biopolymer. In embodiments, the aqueous solution is saturated with the biopolymer.

In embodiments, the biopolymer is suspended or solubilized in an acidic aqueous solution, for instance an aqueous solution comprising acetic acid. Additional examples of potentially suitable acids include, but are not limited to, formic acid, acetic acid, propionic acid, butyric acid, valeric acid, caproic acid, citric acid, lactic acid, oxalic acid, malic acid, tartaric acid, malonic acid, adipic acid, succinic acid, azelaic acid, sulfuric acid, hydrochloric acid, phosphoric acid, nitric acid and boric acid. In embodiments, the aqueous solution comprises about 0.5% w/w to about 10% w/w acid, or about 1% w/w to about 9% w/w, or about 2% w/w to about 8% w/w, or about 3% w/w to about 7% w/w, or about 5% w/w to about 6% w/w.

It is also envisionable to suspend or solubilize chitosan in ionic liquids (ILs). Examples include, but are not limited to, imidazolium-based ionic liquids such as 1-butyl-3-methylimidazolium acetate ([Bmim][OAc]). It is also envisionable to suspend or solubilize chitosan in other compounds such as choline chloride-based natural deep eutectic solvents (NaDES).

In preferred embodiments, the biopolymer comprises high molecular weight chitosan (HMWC). Indeed, that particular biopolymer has proven particularly effective for the purposes of the present invention as demonstrated in the following examples. In embodiments, the aqueous solution comprises about 0.1% w/w to about 10% w/w chitosan, or about 0.5% w/w to about 5% w/w chitosan, or about 1% w/w to about 4% w/w chitosan. In embodiments, the aqueous solution is saturated with HMWC. Preferably, the biopolymer consists of chitosan and more preferably it consists of high molecular weight chitosan (HMWC). The chitosan and/or HMWC may be obtained from any suitable source including, but not limited to, fungi, mushrooms, crustaceans (e.g., crabs, shrimps, lobsters) and insects. In embodiments the HMWC is obtained from commercial sources such as Shijiazhuang Aquaenjoy Environment Corporation Limited (China), Qingdao Chemicals International Trade co., Ltd (China), Yixing Cleanwater Chemicals Co., Ltd (China), and L'Or Rouge de la Côte-Nord Inc. (QC, Canada).

Compositions in accordance with the present invention can be prepared by any suitable method. In embodiments, the biopolymer is solubilized in a proper solvent as defined hereinbefore (e.g., water, acid, etc.). In one particular embodiment, a chitosan solution is prepared by solubilizing 2% w/w chitosan in a 5.5% w/w acetic acid solution. In embodiment, the composition comprises a pH of about 1 to about 5, or about pH 2.5 to about pH 3.8.

The composition in accordance with the present invention may also comprise one or more additional components including, but not limited to, additional solvent(s) (e.g., an alcohol such as ethanol, glycol(s) such as propylene glycol, a dye, a buffer, a preservative, an enzyme, a stabilizer, a thickening agent, a fragrance and mixtures thereof. For instance, it may be envisionable to add lipase(s) to degrade oils and body fats in the water, and/or to add lanthanum chloride to decrease phosphates.

The present invention also encompasses dry compositions. Indeed, the composition of the invention could take the form of a dry powder (or the like) wherein the biopolymer is provided as a powder, granules flakes, etc. the composition further comprising a dry solubilizing agent in a powder form. The biopolymer and dry solubilizing agent may be compacted together in the form of a tablet, puck, briquette, a capsule, or the like.

In embodiments the dry solubilizing agent is an acid (e.g., citric acid, tartaric acid, malic acid, oxalic acid, sulfamic acid) or an acid salt (e.g., sodium bisulfate). Accordingly, a user could solubilize the biopolymer (e.g., chitosan) by mixing the dry composition with water in a container to obtain an aqueous solution, and thereafter empty that aqueous solution in the pool or spa. It is within the skills of those in the art to adjust the parameters provided hereinabove for liquid solutions to obtain suitable dry compositions.

In embodiments the dry composition comprises about 5% w/w to about 10% w/w biopolymer (e.g., chitosan) (e.g. 5% w/w, or 6% w/w, 7% w/w, or 8% w/w, or 9% w/w, 10% w/w) and about 90% w/w to about 95% w/w of the dry solubilizing agent (e.g., an acid or acid salt) in a powder form. In embodiments the dry composition comprises a dose comprising about 1g to about 50g of chitosan (e.g., about 1g, about 5g, about 10g, about 20, about 25g, about 30g, about 40g, or about 50g).

### Kits for water treatment

A related aspect of the invention concerns kits for the treatment of recreational waters, such as pools and spas. A kit of the invention may comprise a container comprising a composition as defined herein, and at least one additional element including, but not limited to, chlorine, a measuring cup, water analysis product(s), written instructions, etc. The container may be a closable container (e.g., a plastic bottle with a cap), a pouch (e.g., a tearable pouch, a zip pouch, dissolving pouch), and the like. The kit may also comprise biopolymer together in a compacted form such as a tablet, puck, briquette, a capsule, or the like. The kit of the invention may comprise one multiple doses (e.g., 1, 5, 10, 25, 50 or more), each dose comprising about 1g to about 50g of chitosan (e.g., about 1g, about 5g, about 10g, about 20, about 25g, about 30g, about 40g, or about 50g).

### Methods for removing undesirable algae

As mentioned hereinbefore, the compositions of the invention are advantageous because they provide for an easy and effective removal of algae in recreational waters.

In accordance with one particular embodiment the method to remove undesirable algae from recreational waters comprises the following steps:
- providing an aqueous solution of biopolymer(s);
- adding said aqueous solution to the recreational waters for flocculating undesirable algae that are present in the recreational waters; and
- removing flocculated algae from the recreational waters.

Without being bound by theory, the present invention uses the principles of "flocculation" for removing suspended algae from the recreational waters, thereby removing any greenish color in the water and reducing turbidity. In accordance with the principle of the present invention, with mild stirring or agitation, algae cells will collide with each other and with the added biopolymer(s) that will act as a flocculant.

As is known, flocculation is a process used in water treatment to bring together fine particles suspended in water into larger particles, known as flocs, which can then be easily separated from the water. Typically, flocculation involves the addition of a flocculating agent or a flocculant, which are chemicals that encourage the suspended particles to aggregate. This encourages the particles to stick together, due to inter-particles attractions. As more particles collide and stick together, they form larger and heavier particles called "flocs". The larger flocs settle faster compared to the individual smaller particles. The larger flocs may settle to the bottom in a sedimentation basin or, in accordance with the present invention, they are preferably filtered out by a filtration system. This leaves the remaining water clearer and cleaner.

For instance, chitosan can capture or aggregate several algae cells. Indeed, chitosan is a biopolymer which contains several amine groups (-NH₂) that are positively charged in an acidic medium (-NH₃⁺), such as an acetic acid solution as defined hereinbefore. On the other hand, algae are naturally negatively charged, which is one of the reasons they typically remain suspended without aggregating. When a chitosan-based composition in accordance with the invention is added to a pool containing algae, the positive groups of chitosan associate with the negative charges of the algal cells (neutralization of charges). Advantageously, by using high molecular weight chitosan (HMWC), it is possible to capture several algal cells in a single floc. Indeed, HMWC can bridge between several algal cells and smaller clusters, thus forming bigger aggregates or flocs that can more easily be retained by the pool filtration system.

Moreover, since chitosan is not very soluble at a pool normal pH (e.g., a pH about 7.2 to about 7.8), it slowly begins to precipitate upon addition to the pool. In doing so, entanglements will form between the polymer chains composing the chitosan molecules, thus creating "nets" or "networks" that will trap the algal cells as these networks are created. Thus, the algae can be quickly removed from the pool by trapping in the filtration system, after which a simple wash of the filtration system will permit to completely eliminate the algae from the filtration system.

Therefore, in embodiments, the removing step of the method comprises trapping flocculated algae in a filtration system (e.g., by filtrating the water for 6h, 12h, 18h, 24h, 48h or more). In embodiments, the method further comprises performing a backwash of the filtration system or a manual cleaning of the filtration cartridges for removing the algae trapped in the filtration system. Whenever necessary, for instance in presence of large quantity of algae, these steps can be repeated for a second time (e.g., adding the composition, filtration and backwash).

In embodiments the aqueous solution of biopolymer(s) is as defined hereinbefore.

In preferred embodiments, the recreational waters consist of the waters of a pool and/or a spa. In embodiments, the recreational waters are the waters of a pool and the method comprises adding about 150 ml to about 500 ml of the composition for each 10 000 liters of water, for instance adding about 500 ml in 20 000 liters (i.e. 250 ml/10 000 liters), or adding about 1 liter in 20 000 liters (i.e., about 500 ml/10 000 liters), or about 1 liter in 55 000 liters (i.e., about 180 mL / 10 000 liters).

The methods of the invention may further comprise adding chemical(s) to the recreational waters including, but not limited to, chlorine, pH adjuster, clarifying agent, alkalinity adjuster, hardness adjuster, chlorine stabilizer, metal sequestering agent.

Those skilled in the art will recognize, or be able to ascertain, using no more than routine experimentation, numerous equivalents to the specific procedures, embodiments, claims, and examples described herein. Such equivalents are considered to be within the scope of this invention and covered by the claims appended hereto. The invention is further illustrated by the following examples, which should not be construed as further or specifically limiting.

### EXAMPLES

Tests were carried out for demonstrating the efficacy of the compositions and methods of the invention. These tests were carried out in outdoor swimming pools that that had turned green naturally.

### Example 1

A chitosan solution was prepared by solubilizing 2% w/w chitosan in a 5.5% w/w acetic acid. 500 mL of that solution was added to a pool comprising 20 000 liters of water (250 ml per 10 000 l).

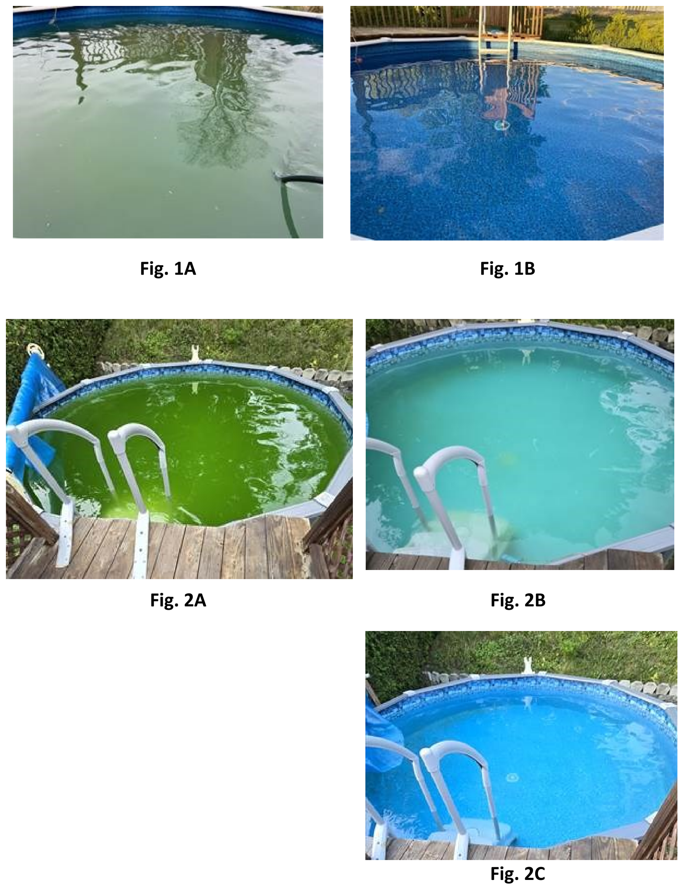

Before the treatment the water was green and cloudy **(****Fig. 1A****).** 24 hours after adding the chitosan solution and normal filtration, the water was blue and crystal-clear (Fig. 2B).

### Example 2

A 2% chitosan solution was prepared in accordance with Example 1. One (1) liter of that solution was added to a pool comprising 20 000 liters of water (500 ml per 10000 l).

Before the treatment the waters were dark green and opaque **(****Fig. 2A****).** 24 hours after adding the chitosan solution and normal filtration, the water contained much less algae since it was of a light green color and only lightly cloudy **(****Fig. 2B****).** A back wash of the filtration system was carried out and one more liter of the chitosan solution was added to the pool. After an additional 24 hours of filtration the water had become blue and crystal-clear **(****Fig. 2C****).**

### Example 3

A 2% chitosan solution was prepared in accordance with Example 1. One (1) liter of that solution was added to a pool comprising 55 000 liters of water (180 ml per 10000 l).

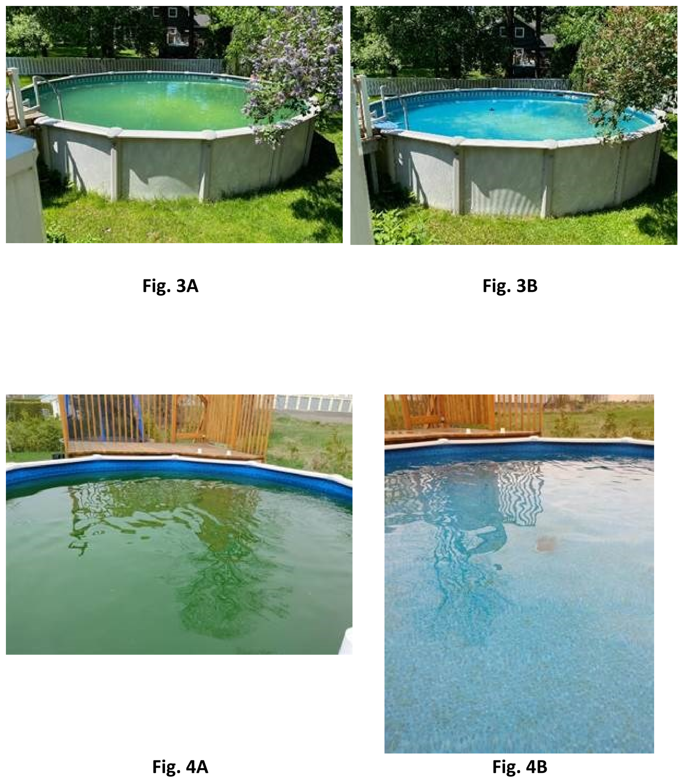

Before the treatment the water was green and cloudy **(****Fig. 3A****).** 24 hours after adding the chitosan solution and normal filtration, the water was blue and crystal-clear **(****Fig. 3B****).**

### Example 4

A 2% chitosan solution was prepared in accordance with Example 1. One (1) liter of that solution was added to a pool comprising 20 000 liters of water (500 ml per 10000 l).

Before the treatment the water was green and cloudy **(****Fig. 4A****).** 24 hours after adding the chitosan solution and normal filtration, the water was blue and crystal-clear **(****Fig. 4B****).**

### Example 5

Additional biopolymers were tested *in vitro* for potential efficacy in removing undesirable algae from recreational waters. In addition to chitosan, the polysaccharides tested included sodium alginate, carrageenan, guar gum, xanthan gum. The proteins collagen and gelatin were also tested.

The tests were conducted using either a culture of the algae *Chlorella sorokiniana,* or a culture comprising a mixture of *Chlorella sorokiniana* and a consortium of cyanobacteria. In both cases, the results were the same.

The algal population of the cultures was evaluated using a microscope and a hemocytometer. The culture was diluted with "synthetic" pool water, i.e., a water where calcium hardness, pH, and alkalinity had been adjusted to match the water of a "real" pool. The algal population was adjusted to approximately 4 x 10⁵ cells/ml. 500 ml of this pool solution was versed in a 600 ml beaker for each biopolymer to be tested. The biopolymers were tested in parallel to a control containing only the pool water.

The pool solutions were stirred at 60 rpm in a Phipps & Bird^{™} jar tester, and the biopolymers were added individually in different beaker at a final concentration of 1 ppm (corresponding to 500 mL / 10,000 L of a 2% w/w solution). This was achieved by using 0.25% to 2% solutions of the different biopolymers and 25 µl to 200 µL of these biopolymer solutions was added to the 500 ml algal solution to achieve a final concentration of 1 ppm. The solutions were next stirred at 60 rpm for 20 hours.

Turbidity at the surface of the solutions was measured with a turbidimeter after that 20 hours and then at 30 minutes, 1 hour, and 2 hours. This typically provides a good indication whether a treatment works and whether the turbidity decreases rapidly over time. Indeed, flocs will settle to the bottom of the beaker whereas, if the treatment does not work, the water remains turbid and green.

Out of the biopolymers tested, only chitosan (i.e., HMWC) was able to clarify the pool waters. Algal flocs were immediately apparent in presence of chitosan. However, neither the negative control or any of the other biopolymers were able to clarify the water or cause the algae to flocculate by gravity.

Interestingly, it was found that chitosan worked even better in presence of chlorine (3 ppm), as it should be present in a pool under normal conditions. For that particular test the chitosan was added to the solution (final concentration of 0.5 ppm of HMWC corresponding to 250 mL / 10,000 L of a 2% w/w solution), the solution was stirred for 1 hour, then chlorine (sodium hypochlorite) was added to achieve a final concentration of 3 ppm. After an additional 19h of stirring, flocculation was observed and after 20 min of settling the water of the surface was very clear since a lot of flocs had already settled to the bottom of the beaker. The control solution, which only include chlorine at a final concentration of 3 ppm, was still cloudy.

### Conclusions

These results clearly demonstrate that a biopolymer composition in accordance with the present invention is surprisingly highly effective for removing undesirable algae from recreational waters such as pools and spas.

In contradistinction, other polysaccharides such as sodium alginate, carrageenan, guar gum, xanthan gum were not effective. The proteins collagen and gelatin were not effective either. These results further confirm that chitosan provides unexpected benefits compared to similar molecules and compounds.

Additional benefits related to the biopolymer composition in accordance with the present invention are related to the fact that composition is more eco-friendly than existing commercial pool-treatment products. Indeed, it is harmless to the environment, it is biodegradable, and it is of natural origin, unlike the products currently used (chlorine, quaternary ammonium-based algaecides).

The present invention thus successfully addresses the need for new compositions and methods for treatment of recreational waters, particularly the removal of algae.

Headings are included herein for reference and to aid in locating certain sections. These headings are not intended to limit the scope of the concepts described therein, and these concepts may have applicability in other sections throughout the entire specification. Thus, the present invention is not intended to be limited to the embodiments shown herein but is to be accorded the widest scope consistent with the principles and novel features disclosed herein.

The singular forms "a", "an" and "the" include corresponding plural references unless the context clearly dictates otherwise. Thus, for example, reference to "a biopolymer" includes one or more of such compounds and reference to "the method" includes reference to equivalent steps and methods known to those of ordinary skill in the art that could be modified or substituted for the methods described herein.

Unless otherwise indicated, all numbers expressing quantities of ingredients, reaction conditions, concentrations, properties, and so forth used in the specification and claims are to be understood as being modified in all instances by the term "about". At the very least, each numerical parameter should at least be construed in light of the number of reported significant digits and by applying ordinary rounding techniques. Accordingly, unless indicated to the contrary, the numerical parameters set forth in the present specification and attached claims are approximations that may vary depending upon the properties sought to be obtained. Notwithstanding that the numerical ranges and parameters setting forth the broad scope of the embodiments are approximations, the numerical values set forth in the specific examples are reported as precisely as possible. Any numerical value, however, inherently contains certain errors resulting from variations in experiments, testing measurements, statistical analyses, and such.

It is understood that the examples and embodiments described herein are for illustrative purposes only and that various modifications or changes in light thereof will be suggested to persons skilled in the art and are to be included within the present invention and scope of the appended claims.

The present application encompasses all novel compounds, compositions, processes, methods, devices, systems and uses substantially as hereinbefore described with particular references to the Examples and the Figures.

## Claims

1. A liquid composition for removing undesirable algae from recreational waters, the composition comprising an aqueous solution of a biopolymer, wherein said biopolymer is selected for causing flocculation of algae when added to said recreational waters, and wherein the biopolymer is present in an amount and at a concentration causing said flocculation.

2. The composition of claim 1, wherein the biopolymer consists essentially of chitosan, or wherein said biopolymer comprises high molecular weight chitosan (HMWC).

3. The composition of claim 1 or 2, wherein said aqueous solution comprises about 0.1% w/w to about 10% w/w chitosan, and wherein said aqueous solution further comprises about 0.5% w/w to about 10% w/w acetic acid, preferably about 2% w/w chitosan and about 5.5% w/w acetic acid.

4. A dry composition for removing undesirable algae from recreational waters, the composition comprising a biopolymer and a solubilizing agent, wherein said biopolymer is selected for causing flocculation of algae when added to said recreational waters, and wherein the biopolymer is preferably in the from of a powder, granules, flakes, a tablet, a puck, a briquette, or a capsule.

5. The dry composition of claim 4, wherein the biopolymer comprises chitosan, wherein the dry solubilizing agent comprises an acid or an acid salt, and wherein the acid or acid salt is preferably selected from the group consisting of citric acid, tartaric acid, malic acid, oxalic acid, sulfamic acid, and sodium bisulfate.

6. A method to remove undesirable algae from recreational waters, the method comprising:
- providing a composition as defined in any one of claims 1 to 5;
- adding said composition to the recreational waters for flocculating undesirable algae present therein; and
- removing flocculated algae from the recreational waters.

7. The method of claim 6, wherein said removing comprises trapping said flocculated algae in a filtration system.

8. The method of claim 7, further comprising performing a backwash of said filtration system for eliminating algae trapped in the filtration system.

9. A kit for water treatment of swimming pools or spas, comprising: (i) a container comprising one or more dose of a composition as defined in any one of claims 1 to 5; and (ii) at least one of (a) chlorine, (b) a measuring cup, (c) water analysis product(s), and (c) written instructions.

10. The kit of claim 9, wherein each dose comprises 1 g to about 50g of chitosan.

11. The kit of claim 9 or 10, wherein the container is selected from the group consisting of a closable container, a tearable pouch, a zip pouch, and a dissolving pouch, and wherein said composition is in the form of a powder, granules, flakes, a tablet, a puck, a briquette or a capsule.

12. Use of a biopolymer for removing undesirable algae from recreational waters, the biopolymer preferably comprising chitosan, and most preferably high molecular weight chitosan (HMWC).

13. The use of claim 12, wherein the biopolymer is used in an amount and at a concentration causing flocculation of said undesirable algae, and wherein said flocculation still occurs when the biopolymer is diluted in the recreational waters at a concentration of about 10 ppm to about 0.1 ppm.

14. The use of claim 12 or 13, wherein the biopolymer is solubilized in an aqueous solution, and wherein said aqueous solution comprises about 0.1% w/w to about 10% w/w biopolymer.

15. The use of any one of claims 12 to 14, wherein the biopolymer is solubilized in an aqueous solution comprising about 0.5% w/w to about 10% w/w acetic acid, and wherein said aqueous solution comprises about 0.1% w/w to about 10% w/w chitosan.
